## Europäisches Patentamt

(19) **European Patent Office**

**Office européen des brevets**

(11) Veröffentlichungsnummer: **0 231 479**
**B1**

(12) **EUROPÄISCHE PATENTSCHRIFT**

(45) Veröffentlichungstag der Patentschrift:
**08.11.89**

(51) Int. Cl.⁴: **F16C 11/06**

(21) Anmeldenummer: **86116936.5**

(22) Anmeldetag: **05.12.86**

(54) **Kugelgelenk.**

(30) Priorität: **31.01.86 DE 3602917**

(43) Veröffentlichungstag der Anmeldung:
**12.08.87 Patentblatt 87/33**

(45) Bekanntmachung des Hinweises auf die Patenterteilung:
**08.11.89 Patentblatt 89/45**

(84) Benannte Vertragsstaaten:
**DE FR GB IT**

(56) Entgegenhaltungen:
**DE-A- 2 443 091**
**DE-B- 1 300 740**
**FR-A- 2 216 853**
**FR-A- 2 250 042**
**FR-A- 2 376 322**
**GB-A- 886 571**

(73) Patentinhaber: **TRW Ehrenreich GmbH & Co. KG,**
**Hansa-Allee 190, D-4000 Düsseldorf 11(DE)**

(72) Erfinder: **Eiichi, Ito, Am Eisenbrand 20,**
**D-4005 Meerbusch 1(DE)**

(74) Vertreter: **Patentanwälte Dipl.-Ing. Alex Stenger**
**Dipl.-Ing. Wolfram Watzke Dipl.-Ing. Heinz J. Ring,**
**Kaiser-Friedrich-Ring 70, D-4000 Düsseldorf 11(DE)**

ACTORUM AG

## Beschreibung

Gegenstand der Erfindung ist ein Kugelgelenk mit einem Gelenkgehäuse, einem Kugelkopf mit Kugelzapfen, einer zwischen dem Gelenkgehäuse und dem Kugelkopf eingesetzten Lagerschale, sowie einem Gehäusedeckel oder Gehäuseboden, wobei die Lagerschale zur Zapfenachse weisende, sich zwischen dem Gehäusedeckel oder Gehäuseboden und dem Kugelkopf erstreckende Biegefedern aufweist, die am Kugelkopf anliegen. Derartige Kugelgelenke werden vornehmlich in Radaufhängungen und Lenkgestängen von Kraftfahrzeugen eingesetzt.

Aus dem DE-U 7 430 451 ist ein Kugelgelenk mit einer Lagerschale und damit einteiligem Deckel bekannt, an den federnde Lamellen nach Art einer Ring-Krallenfeder angeformt sind. Die Lamellen liegen an ihrer Unterseite ganzflächig auf dem Kugelkopf auf und sollen eine Spielfreiheit des Gelenkes auch bei beginnendem Verschleiß gewährleisten. Die Ausbildung und Belastung der Lamellen bedingen eine relativ harte Federkennlinie, so daß die Druckkraft auf den Kugelkopf in Folge von Fertigungsabweichungen und des Verschleißweges relativ stark schwankt. Bei einem Kugelkopf ohne Polkappe läßt sich ein nur sehr geringer Federweg verwirklichen, da dieser im Bereich des Poles an dem massiven Gehäusedeckel aufsitzt. Bei einem Kugelkopf mit Polkappe hingegen ergeben sich beim Ausschwenken des Kugelzapfens weitere Druckschwankungen und unsymmetrische Druckverteilungen. Dies ist darauf zurückzuführen, daß die Lamellen nur noch bereichsweise auf dem Kugelkopf aufliegen, wenn die Polkappe unter diese geschwenkt wird. Festigkeitsmäßig sind die Lamellen zudem besonders ungünstig, da sie ihren engsten Querschnitt an der Stelle ihrer einteiligen Verbindung mit dem Deckel haben. Die Lamellen unterliegen aber hohen Belastungen, insbesondere durch in Deckelrichtung auf den Kugelzapfen wirkende Axialkräfte.

Aus dem DE-U 1 826 870 ist ein Kugelgelenk bekannt, bei dem der Kugelkopf bzw. die Lagerschale durch eine zusätzliche Krallenfeder am Gelenkgehäuse abgestützt wird. Die Krallenfeder liegt mit einem starren, haubenförmigen Mittelteil auf dem Kugelkopf auf bzw. mit einem starren Innenring an der Lagerschale an. Die biegsamen Krallen stützen sich mit ihren, von der Zapfenachse wegweisenden freien Enden an dem Gehäusedeckel bzw. dem Gelenkgehäuse ab. Diese Kugelgelenke haben den Nachteil, daß die Krallen nur geringe elastische Verformungswege haben. So können Fertigungstoleranzen und betrieblicher Verschleiß nur bedingt ausgeglichen werden. Wenn der Kugelkopf mit einer Polfläche versehen ist und die Krallenfeder direkt auf dem Kugelkopf abgestützt ist, ergeben sich, in bereits beschriebener Weise, stark schwankende Druckkräfte auf den Kugelkopf. Sämtlichen Ausführungsbeispielen ist gemeinsam, daß sie mit der Krallenfeder ein weiteres Konstruktionselement haben, welches zusätzlichen Raumbedarf hat, daß die Krallenfeder nicht gegen ein Mitdrehen gesichert ist und daß Kräfte in Richtung der Zapfenachse voll in die Krallenfeder eingeleitet werden.

Aus der FR-A 2 250 042 ist ein Kugelgelenk mit einer Lagerschale bekannt, die ein kuppelförmig gewölbtes und mit einer kleinen zentrischen Öffnung versehenes Wandungsteil aufweist. Bei zusammengebautem Kugelgelenk ist das Wandungsteil einer elastischen Verformung unterworfen, weil der Kugelkopf in Anlage an zwei ringförmigen Tragzonen der Innenseite der Lagerschale kommt und der Deckel des Kugelgelenkes gegen eine obere Endfläche des kuppelförmigen Wandungsteiles drückt. Bei dem Kugelgelenk sind jedoch die Schwankungen der Vorspannung infolge Fertigungstoleranzen und Verschleiß relativ groß. Die Federcharakteristik der elastischen Lagerschale ist nämlich verhältnismäßig steil ansteigend. Außerdem ist die Auflagefläche des Wandungsteiles nicht genau definiert, da sie erheblich von der Tolerierung der Gelenkteile abhängt und sich bei Gelenkverschleiß oder bei axialer Belastung des Kugelzapfens und der damit verbundenen Verformung des Wandungsteiles weiter verändert.

Die DE-B 1 300 740 offenbart ein Kugelgelenk mit einer Lagerschale, die an einer einem Verschlußdeckel zugewandten Seite Biegefedern aufweist, die an der Oberfläche eines Kugelkopfes anliegen und im Abstand von dem Verschlußdeckel angeordnet sind. Bei dieser Konstruktion muß die Lagerschale aus einem hartelastischen Kunststoff ausgeführt werden, damit die frei ausbiegbaren Biegefedern mit einer ausreichenden Vorspannung auf dem Kugelkopf aufliegen. Aufgrund der geringen Verformbarkeit des hartelastischen Materials und der unbehinderten Ausbiegbarkeit der Biegefedern können diese aber durch große axiale Druckkräfte beschädigt werden. Außerdem bedingt das hartelastische Lagerschalenmaterial, daß sich Maßschwankungen des Gelenkgehäuses durch die Lagerschalenwand hindurch auf den Kugelkopf und dessen Vorspannung auswirken. Dabei sind die hartelastischen und relativ kurzen Biegefedern nur geringfügig auslenkbar, so daß sie nicht in dem gewünschten Ausmaß Fertigungstoleranzen ausgleichen und Verschleiß aufholen können. Zu der geringfügigen Auslenkbarkeit der Biegefedern trägt auch bei, daß diese unmittelbar neben ihrer Verbindungsstelle mit der Lagerschale auf dem Kugelkopf aufliegen.

Davon ausgehend liegt der Erfindung die Aufgabe zugrunde, ein technisch verbessertes Kugelgelenk mit Biegefedern zu schaffen, die insbesondere eine konstantere Druckkraft auf den Kugelkopf ausüben.

Zur technischen Lösung dieser Aufgabe wird vorgeschlagen, daß die Biegefedern mit ihren freien Enden an dem Gehäusdeckel oder Gehäuseboden anliegen, daß die freien Enden der Biegefedern einen Abstand von dem Kugelkopf haben, und daß die bei montiertem Kugelgelenk abgebogenen Biegefedern mit nockenartigen Erhebungen an dem Kugelkopf anliegen.

Bei einem nach dieser technischen Lehre ausgebildeten Kugelgelenk bilden die Biegefedern eine Stirnseite der Lagerschale, wobei sie einerseits mit dem Mantel der Lagerschale fest verbunden sind und andererseits in Nähe der Zapfenachse freie Enden haben. Der Gehäusedeckel oder Gehäuseboden übt auf die freien Enden eine Kraft aus, so daß die Biegefedern elastisch verformt werden und ihrerseits eine Druckkraft auf den Kugelkopf ausüben. Da die Biegefedern in einem Abstand von den freien Enden an dem Kugelkopf anliegen, ist ihre elastische Verformbarkeit groß und steigt die Druckkraft auf den Kugelkopf nur sanft mit der Auslenkung der freien Enden an. Mit der Erfindung werden also relativ lange Biegefedern verwirklicht, deren elastische Verformung einen Großteil der Fertigungstoleranzen bzw. Materialabnutzung von Lagerschale, Gelenkgehäuse und Gehäusedeckel auffängt, um eine annähernd konstante Druckkraft in den Kugelkopf einzuleiten. Aufgrund der nockenartigen Erhebungen ist die Auflagefläche der Biegefedern unabhängig von ihren Auslenkungen an den freien Enden. So können erfindungsgemäße Kugelgelenke mit annähernd konstanten Kennwerten hergestellt und betrieben werden.

Bei einer praktischen Ausführungsform haben die Biegefedern zwischen ihren freien Enden und dem Verbindungsbereich zur Lagerschale einen Abstand vom Gehäusedeckel oder Gehäuseboden.

Bei einer weiteren Ausführungsform hat der Kugelkopf eine Polfläche und liegen die Biegefedern außerhalb des Schwenkbereiches der Polfläche an dem Kugelkopf an, wodurch stets eine symmetrische Druckverteilung und eine konstante Druckkraft auf dem Kugelkopf erreicht wird.

Bei einer weiteren Ausführungsform sind die Biegefedern Trapezfedern. Die Stirnfläche der Lagerschale kann besonders günstig der Kugelform angepaßt werden, wenn diese von zur Zapfenachse geneigten Trapezfedern gebildet wird. Trapezfedern haben außerdem günstige Festigkeits- und Federeigenschaften, da sie ihren größten Querschnitt an der Einspannstelle haben.

Bei einer weiteren Ausführungsform hat der Gehäusedeckel oder Gehäuseboden eine topfartige Auswölbung und liegen die freien Enden der Biegefedern an der zylindrischen Innenwand der Auswölbung an, so daß die Druckkraft der Biegefedern auf den Kugelkopf nahezu unabhängig von herstellungsbedingten Abstandsschwankungen zwischen Gehäusedeckel oder Gehäuseboden und Lagerschale ist. Hierdurch können außerdem größere Fettreservoirs und längere Biegefedern verwirklicht werden.

Bei einer weiteren Ausführungsform sind die Biegefedern an den freien Enden parallel zur Auflagefläche auf dem Gehäusedeckel oder Gehäuseboden abgewinkelt, wodurch eine günstige Krafteinleitung in die Biegefedern erreicht wird.

Bei einer weiteren Ausführungsform liegt die Lagerschale mit den Biegefedern und mit einer Gleitfläche an dem Kugelkopf an, die diesen beidseitig der Äquatorebene, die senkrecht zur Zapfenachse steht, abstützt. So werden Kräfte in Richtung der Zapfenachse und quer dazu hauptsächlich über die Gleitfläche in die Lagerschale und das Gelenkgehäuse eingeleitet. Die relativ empfindlichen Biegefedern werden hierdurch kaum belastet, so daß ihre Federwirkung erhalten bleibt und sie eine praktisch konstante Druckkraft in den Kugelkopf einleiten.

Die erfindungsgemäße Lagerschale kann einteilig hergestellt werden und ist dann besonders preiswert.

Bei einer weiteren Ausführungsform besteht die Lagerschale aus Polyoxymethylen (POM). In herkömmlichen Kugelgelenken hat der Einsatz von Lagerschalen aus POM große Schwankungen des Dreh- bzw. Kippmomentes zur Folge, da Fertigungsabweichungen und die hohe Steifigkeit dieses Materials große Abweichungen der Druckkraft auf den Kugelkopf bedingen. Eine erfindungsgemäße Lagerschale hingegen kann auch unter Verwendung größerer Schwankungen des Dreh- bzw. Kippmomentes aus POM aufgebaut werden, da die Druckkraft auf den Kugelkopf hauptsächlich von den Biegefedern festgelegt wird.

Bei einer weiteren Ausführungsform hat die Lagerschale stirnseitig einen außen umlaufenden Flansch, der in eine stufenförmige Ausnehmung des Gelenkgehäuses eingesetzt und eingewalzt wird. Durch den umlaufenden Flansch wird die Lagerschale sowohl im Gelenkgehäuse gehalten, als auch gegen ein Verdrehen gesichert. Der Einfluß der Haltekraft auf die Vorspannung des Kugelkopfes ist praktisch vernachlässigbar. Besonders vorteilhaft ist es, wenn der Flansch an der, dem Gehäusedeckel zugewandten Stirnseite umläuft und mit dem Gehäusedeckel eingewalzt wird. Dann ist nämlich der Gehäusedeckel direkt auf der Lagerschale abgestützt, wodurch beide Bauteile in einer sehr gut reproduzierbaren Lagebeziehung stehen und der Einfluß von Fertigungsabweichungen auf die Kennwerte des Kugelgelenkes weiter verkleinert wird.

Weitere Einzelheiten und Vorteile des Gegenstandes der Erfindung ergeben sich aus der nachfolgenden Beschreibung der zugehörigen Zeichnungen, in denen zwei bevorzugte Ausführungsformen eines erfindungsgemäß ausgebildeten Kugelgelenkes schematisch dargestellt worden sind. In den Zeichnungen zeigen:

Fig. 1 ein Kugelgelenk im montierten Zustand und im Längsschnitt;
Fig. 2 dasselbe Kugelgelenk als Sprengbild;
Fig. 3 Einzelheit III aus Fig. 1 in stark vergrößerter Darstellung;
Fig. 4 Einzelheit eines Kugelgelenkes mit Auswölbung am am Gehäusedeckel in einer Darstellung entsprechend Fig. 3.

In einem Gelenkgehäuse 1 ist ein Kugelzapfen 2 mit einem Kugelkopf 3 unter Zwischenlage einer Lagerschale 4 aus elastischem Material angeordnet. Das Gelenkgehäuse 1 ist oben mit einem eingewalzten Gehäusedeckel 5 verschlossen, der ein Fettreservoir 6 abdeckt. Mit dem Gehäusedeckel 5 ist der außen umlaufende Flansch 7 der Lagerschale 4 in einer stufenförmigen Ausnehmung 8 des Gelenkgehäuses 1 eingewalzt.

Die Lagerschale 4 kann aus einem hartelastischen Kunststoff, beispielsweise aus Polyoxymethylen (POM) bestehen.

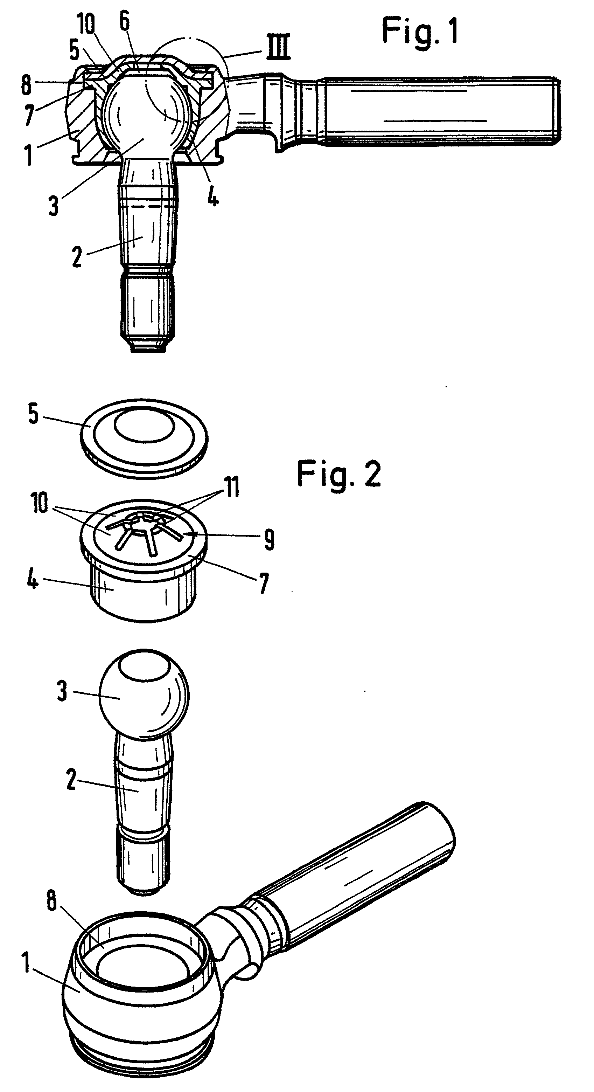

Wie aus der Fig. 2 ersichtlich, hat die Lagerschale 4 an ihrer, dem Kugelzapfen abgewandten Stirnseite 9 sechs trapezförmige Biegefedern 10, deren freie Enden 11 zur Zapfenachse weisen, die durch die Mittelachse der Lagerschale 4 verläuft. Die Biegefedern 10 sind zur Zapfenachse geneigt, so daß sie den eingesetzen Kugelkopf 3 in der Nähe seines Pols annähernd tangential umhüllen.

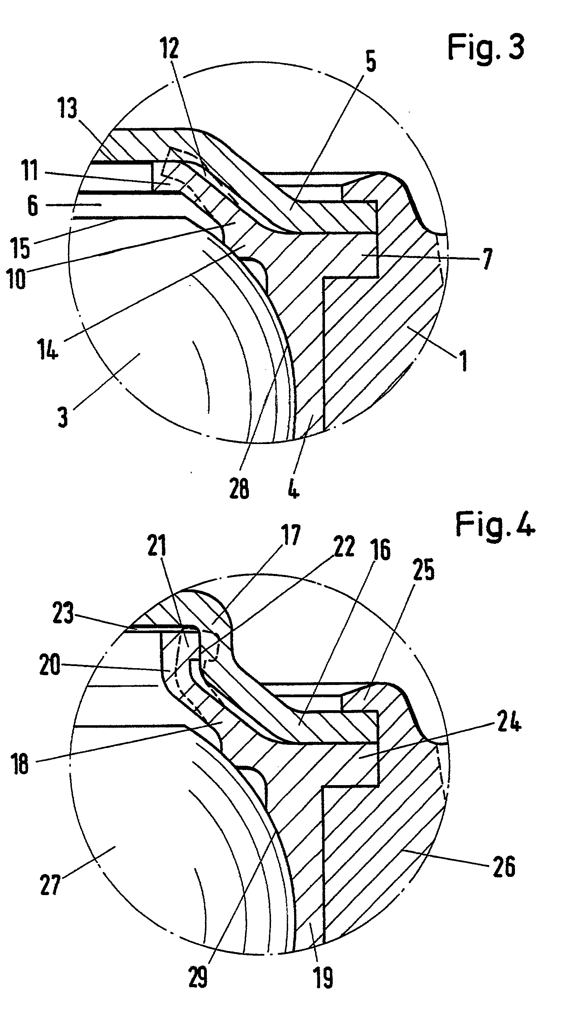

Bei der Montage des Kugelgelenkes wird zunächst der Kugelkopf 3 in die Lagerschale 4 eingesetzt und sodann die Lagerschale 4 mit dem Gehäusedeckel 5 in das Gelenkgehäuse 1 eingewalzt. Wie aus der vergrößerten Schnittdarstellung der Fig. 3 ersichtlich, werden dabei die Biegefedern 10 aus ihrer gestrichelt gezeichneten Ausgangslage elastisch in ihre ausgezogen dargestellte Endlage im Hohlraum 12 zwischen Gehäusedeckel 5 und Kugelkopf 3 verformt. Ursächlich hierfür ist eine Druckkraft, die über eine Auflagefläche 13 des Gehäusedeckels 5 auf die, parallel zur Auflagefläche 13 umgebogenen freien Enden 11 der Biegefedern 10 ausgeübt wird. Die Biegefedern 10 üben ihrerseits über nockenartige Erhebungen 14, die von den freien Enden 11 beabstandet sind, eine Druckkraft auf den Kugelkopf 3 aus. Die so übertragene Druckkraft ist relativ unempfindlich gegenüber Fertigungsschwankungen.

Die nockenartigen Erhebungen 14 der Biegefedern 10 sind so weit außen angeordnet, daß sie stets außerhalb des Schwenkbereiches der Polfläche 15 auf dem Kugelkopf 3 aufliegen. Dies ermöglicht den Einsatz von Kugelköpfen mit Polflächen ohne die nachteilige Folge einer Abhängigkeit der Druckkraft auf den Kugelkopf von der Auslenkung des Kugelzapfens.

Die Fig. 4 zeigt eine weitere Ausführungsform mit einem Gehäusedeckel 16, der symmetrisch zur Zapfenachse eine topfartige Auswölbung 17 hat. In dieser Auswölbung 17 greifen Biegefedern 18 einer Lagerschale 19 mit senkrecht nach oben abgewinkelten, freien Enden 20 ein, wobei sie mit Nocken 21 an der zylindrischen Innenwand 22 der Auswölbung 17 anliegen. Die freien Enden 20 sind durch einen Spalt 23 vom Boden der Auswölbung 17 getrennt. Wenn die Lagerschale 19 an ihrem Flansch 24 gemeinsam mit dem Gehäusedeckel 16 durch Einwalzen eines Randes 25 in dem Gelenkgehäuse 26 festgelegt wird, bewirken Abstandsschwankungen zwischen Gehäusedeckel 16 und Lagerschale 19 praktisch keine Schwankung der Druckkraft auf den Kugelkopf 27.

Bei den gezeigten Ausführungsformen ist es besonders günstig, daß die Lagerschalen 4,19 den Kugelkopf 3,27 mit ihrer Gleitfläche 28,29 beidseitig der Äquatorebene, die senkrecht zur Zapfenachse steht, abstützt. Hierdurch werden die Biegefedern 10,18 von axial und radial wirkenden Kräften entlastet.

**Patentansprüche**

1. Kugelgelenk mit einem Gelenkgehäuse (1), einem Kugelkopf (3) mit Kugelzapfen (2), einer zwischen dem Gelenkgehäuse (1) und dem Kugelkopf (3) eingesetzten Lagerschale (4), sowie einem Gehäusedeckel (5) oder Gehäuseboden, wobei die Lagerschale (4) zur Zapfenachse weisende, sich zwischen dem Gehäusedeckel (5) oder Gehäuseboden und dem Kugelkopf (3) erstreckende Biegefedern (10) aufweist, die am Kugelkopf (3) anliegen, dadurch gekennzeichnet,
a) daß die Biegefedern (10) mit ihren freien Enden (11) an dem Gehäusedeckel (5) oder Gehäuseboden anliegen,
b) daß die freien Enden (11) der Biegefedern (10) einen Abstand von dem Kugelkopf (3) haben,
c) daß die bei montiertem Kugelgelenk abgebogenen Biegefedern (10) mit nockenartigen Erhebungen (14) an dem Kugelkopf (3) anliegen.

2. Kugelgelenk nach Anspruch 1, dadurch gekennzeichnet, daß die Biegefedern (10) zwischen ihren freien Enden (11) und dem Verbindungsbereich zur Lagerschale (4) einen Abstand vom Gehäusedeckel (5) oder Gehäuseboden haben.

3. Kugelgelenk nach einem der Ansprüche 1 bis 2, dadurch gekennzeichnet, daß der Kugelkopf (3) eine Polfläche (15) hat und daß die Biegefedern (10) außerhalb des Schwenkbereichs der Polfläche (15) an dem Kugelkopf (3) anliegen.

4. Kugelgelenk nach einem der Ansprüche 1 bis 3, dadurch gekennzeichnet, daß die Biegefedern (10) Trapezfedern sind.

5. Kugelgelenk nach einem der Ansprüche 1 bis 4, dadurch gekennzeichnet, daß der Gehäusedeckel (16) oder Gehäuseboden eine topfartigte Auswölbung (17) hat und daß die freien Enden (20) der Biegefedern an der zylindrischen Innenwand (22) der Auswölbung (17) anliegen.

6. Kugelgelenk nach einem der Ansprüche 1 bis 5, dadurch gekennzeichnet, daß die Biegefedern (10, 18) an den freien Enden (11, 20) parallel zur Auflagefläche (13, 22) an dem Gehäusedeckel (5, 16) oder Gehäuseboden abgewinkelt sind.

7. Kugelgelenk nach einem der Ansprüche 1 bis 6, dadurch gekennzeichnet, daß die Lagerschale (4, 19) mit den Biegefedern (10, 18) und mit einer Gleitfläche (28, 29) auf dem Kugelkopf anliegt, die diesen beiseitig der Äquatorebene, die senkrecht zur Zapfenachse steht abstützt.

8. Kugelgelenk nach einem der Ansprüche 1 bis 7, dadurch gekennzeichnet, daß die Lagerschale (4, 19) einteilig ist.

9. Kugelgelenk nach einem der Ansprüche 1 bis 8, dadurch gekennzeichnet, daß die Lagerschale (4, 19) aus Polyoxymethylen (POM) besteht.

10. Kugelgelenk nach einem der Ansprüche 1 bis 9, dadurch gekennzeichnet, daß die Lagerschale (4) stirnseitig einen außen umlaufenden Flansch (7) hat, der in eine stufenförmige Ausnehmung (8) des Gelenkgehäuses (1) eingesetzt und eingewalzt wird.

11. Kugelgelenk nach einem der Ansprüche 1 bis 10, dadurch gekennzeichnet, daß der Flansch (7) an der, dem Gehäusedeckel (5) zugewandten Stirnseite (9) umläuft und mit dem Gehäusedeckel (5) eingewalzt wird.

**Claims**

1. Ball joint having a joint housing (1), a ball head (3) with ball spigot (2), a bearing shell (4) inserted between the joint housing (1) and the ball head (3), and a housing cover (5) or housing base, the bearing shell (4) exhibiting flexural springs (10) facing the spigot axis and extending between the housing cover (5) or housing base and the ball head (3), which abut the ball head (3), characterized in that

a) the flexural springs (10) abut the housing cover (5) or housing base with their free ends (11),

b) the free ends (11) of the flexural springs (10) have an interval from the ball head (3),

c) the flexural springs (10), which are bent in the assembled ball joint, abut the ball head (3) with camlike elevations (14).

2. Ball joint according to Claim 1, characterized in that the flexural springs (10) have an interval from the housing cover (5) or housing base between their free ends (11) and the region of connection to the bearing shell (4).

3. Ball joint according to either Claim 1 or 2, characterized in that the ball head (3) has a pole surface (15) and that the flexural springs (10) abut the ball head (3) outside the pivotal region of the pole surface (15).

4. Ball joint according to one of Claims 1 to 3, characterized in that the flexural springs (10) are trapezoidal springs.

5. Ball joint according to one of Claims 1 to 4, characterized in that the housing cover (16) or housing base has a pot-shaped curvature (17) and that the free ends (20) of the flexural springs abut the cylindrical inner wall (22) of the curvature (17).

6. Ball joint according to one of Claims 1 to 5, characterized in that the flexural springs (10, 18) are angled at the free ends (11, 20) parallel to the support surface (13, 22) on the housing cover (5, 16) or housing base.

7. Ball joint according to one of Claims 1 to 6, characterized in that the bearing shell (4, 19) abuts the ball head by the flexural springs (10, 18) and by a sliding surface (28, 29) which braces the latter on both sides of the equatorial plane which is oriented at right angles to the spigot axis.

8. Ball joint according to one of Claims 1 to 7, characterized in that the bearing shell (4, 19) is in one piece.

9. Ball joint according to one of Claims 1 to 8, characterized in that the bearing shell (4, 19) consists of polyoxymehylene (POM).

10. Ball joint according to one of Claims 1 to 9, characterized in that the bearing shell (4) has on its end face an external all-round flange (7) which is inserted and rolled into a step-shaped recess (8) of the joint housing (1).

11. Ball joint according to one of Claims 1 to 10, characterized in that the flange (7) extends round the end face (9) facing the housing cover (5) and is rolled with the housing cover (5).

**Revendications**

1. Joint à rotule comportant un boîtier de joint (1), une tête de rotule (3) avec axe de rotule (2), une coquille de palier (4) placée entre le boîtier (1) et la tête de rotule (3), ainsi qu'un couvercle de boîtier (5) ou fond de boîter, la coquille de palier (4) comportant des ressorts de flexion (10) tournés vers l'axe et s'étendant entre le couvercle de boîtier (5) ou le fond de boîtier et la tête de rotule (3), lesquels ressorts s'appliquent contre la tête de rotule (3), caractérisé en ce que

a) les ressorts de flexion (10) s'appliquent par leurs extrémités libres (11) contre le couvercle de boîtier (5) ou le fond de boîtier,

b) les extrémités libres (11) des ressorts de flexion (10) sont éloignées de la tête de rotule (3),

c) les ressorts de flexion (10) repliés, lorsque le joint à rotule est monté, s'appliquent contre la tête de rotule (3), par des reliefs (14) en forme de came.

2. Joint à rotule selon la revendication 1, caractérisé en ce que les ressorts de flexion (10) sont écartés du couvercle de boîtier (5) ou du fond de boîtier, entre leurs extrémités libres (11) et la zone de liaison avec la coquille de palier (4).

3. Joint à rotule selon l'une des revendications 1 et 2, caractérisé en ce que la tête de rotule (3) a une surface polaire (15), et en ce que les ressorts de flexion s'appliquent contre la tête de rotule (3), à l'extérieur de la zone de pivotement de la surface polaire (15).

4. Joint à rotule selon l'une des revendications 1 à 3, caractérisé en ce que les ressorts de flexion (10) sont des ressorts trapézoïdaux.

5. Joint à rotule selon l'une des revendications 1 à 4, caractérisé en ce que le couvercle de boîtier (16) ou le fond de boîtier présente un bombement (17) à la manière d'un pot, et en ce que les extrémités libres (20) des ressorts de flexion s'appliquent contre la paroi intérieure (22) cylindrique du bombement (17).

6. Joint à rotule selon l'une des revendications 1 à 5, caractérisé en ce que les ressorts de flexion (10, 18) sont coudés aux extrémités libres (11, 20) parallèlement à la surface d'appui (13, 22), contre le couvercle de boîtier (5, 16) ou le fond de boîtier.

7. Joint à rotule selon l'une des revendications 1 à 6, caractérisé en ce que la coquille de palier (4, 19) avec les ressorts de flexion (10, 18) et une surface de glissement (28, 29) s'applique sur la tête de rotule, et soutient celle-ci des deux côtés du plan de l'équateur qui est perpendiculaire à l'axe de la rotule.

8. Joint à rotule selon l'une des revendications 1 à 7, caractérisé en ce que la coquille de palier (4, 19) est faite d'une seule pièce.

9. Joint à rotule selon l'une des revendications 1 à 8, caractérisé en ce que la coquille de palier (4, 19) est en polyoxyméthylène (POM).

10. Joint à rotule selon l'une des revendications 1 à 9, caractérisé en ce que la coquille de palier (4) présente sur sa face frontale une bride (7) périphérique extérieure qui est placée et sertie dans un évidement (8) en forme de gradin du boîtier de joint (1).

11. Joint à rotule selon l'une des revendications 1 à 10, caractérisé en ce que la bride (7) fait le tour de la face frontale (9) tournée vers le couvercle de boîtier (5), et est sertie avec le couvercle de boîtier (5).

EP 0 231 479 B1

Fig. 1

Fig. 2

**Fig. 3**

**Fig. 4**